# EUROPÄISCHE PATENTSCHRIFT

(11) **EP 0 498 917 B1**
(45) Veröffentlichungstag und Bekanntmachung des Hinweises auf die Patenterteilung: **05.07.1995**
(21) Anmeldenummer: 91102195.4
(22) Anmeldetag: 15.02.1991
(51) Int. Cl.: H02M 3/335

(54) **Taktgesteuerter Umrichter mit Strombegrenzung**
Clock-controlled converter with current limiting
Convertisseur commandé par horloge avec limitation de courant

(43) Veröffentlichungstag der Anmeldung: 19.08.1992
(73) Patentinhaber: SIEMENS AKTIENGESELLSCHAFT, 80333 München (DE)
(72) Erfinder: Nonnenmacher, Ulrich, Dipl.-Ing., W-8035 Gauting (DE)

(56) Entgegenhaltungen:
- EP-A- 0 404 993
- DE-B- 2 838 009
- US-A- 4 772 995

## Beschreibung

Die Erfindung bezieht sich auf einen wie im Oberbegriff des Patentanspruchs 1 angegebenen Gleichstromumrichter.

Ein derartiger Umrichter ist bereits aus der DE-B1-28 38 009 bekannt. Bei dem bekannten Umrichter wird ein Leistungsschalttransistor durch einen Taktgeber mit Einschaltimpulsen konstanter Arbeitsfrequenz angesteuert. Zur Regelung der Ausgangsspannung wird der Tastgrad, das heißt der Quotient der Einschaltzeit des Leistungsschalttransistors zur Periodendauer verändert. Bei Überlast am Ausgang des Gleichstromumrichters wird zum Schutz der Bauteile der Strom im Leistungskreis begrenzt. Dies wird durch eine Verkürzung der Einschaltzeit erreicht. Dabei wird der Schalttransistor mit Hilfe einer Strommeßschaltung gesperrt, sobald der gemessene Momentanwert des durch den Schalttransistor fließenden Stromes einen vorgegebenen Grenzwert übersteigt.

Da die begrenzte Schaltgeschwindigkeit des Schalttransistors und die Laufzeiten der Meß- und Steuerschaltung eine Mindesteinschaltzeit bedingt und diese Mindesteinschaltzeit eine wirtschaftlich nicht vertretbare Überbemessung der Leistungskreis-Bauteile für den Kurzschlußfall erfordern würde, greift bei dem bekannten Umrichter eine weitere Strommeßschaltung ein, wenn die Mindesteinschaltzeit des Schalttransistors unterschritten werden müßte. Bei dem bekannten Umrichter geschieht dies, wenn die Spannung an der Bürde eines Stromwandlers daher um mehr als die Schwellenspannung einer Diode angestiegen ist. Diese zusätzliche Einwirkung legt - gegebenenfalls wiederholt - Schaltpausen von der Dauer mehrerer Perioden ein, so daß der Strom im Leistungskreis nicht über eine vorgegebene Grenze steigt. Auf diese Weise läßt sich eine weitergehende Strombegrenzung erzielen. Allerdings setzt die zweite Meßschaltung erst ein, nachdem der Strom auf einen Wert angewachsen ist, der deutlich über dem Grenzwert der ersten Meßschaltung liegt.

Bei einer Strombegrenzung durch Auslassen einzelner Einschaltimpulse können sich darüber hinaus zeitweise Pfeifgeräusche und/oder Betriebszustände ergeben, bei der der Umrichter fortlaufend zwischen zwei Arbeitspunnkten hin und herspringt. Ferner können sich Schwierigkeiten für eine definierte Funktion einer solchen Strombegrenzung dadurch ergeben, daß für die Funktion mehrere Toleranzen relevant sind, nämlich Toleranzen des Komparators der zweiten Stufe, Toleranzen der Dioden-Schwellspannung, Toleranzen der Referenz, Temperaturgang der Auswerteschaltung und eine Streuung der Anzahl der unterdrückten Pulse.

Aus der EP-404 993-A1 ist bereits ein Gleichstromumrichter mit Strombegrenzung bekannt, der zusätzlich zu einer Anordnung zur Strombegrenzung eine weitere Anordnung zur Strombegrenzung aufweist. Die weitere Anordnung mißt die Impulsbreite der im Primärkreis des Gleichstromumrichters fließenden Impulse. Eine Steuerschaltung, die einen im Hauptstromkreis angeordneten elektronischen Schalter steuert, wird durch die weitere Anordnung derart gesteuert, daß bei Unterschreiten einer vorgegebenen Impulsbreite Steuerimpulse unterdrückt werden. Auch bei diesem Gleichstromumrichter werden zur Strombegrenzung gegebenenfalls Einschaltimpulse ausgelassen und es sind auch in diesem Fall mehrere Toleranzen relevant, nämlich Toleranzen von Komparatoren und einer Referenzspannung.

Bei leistungsstarken Geräten mit kleinem Innenwiderstand oder bei Geräten mit vergleichsweise großer Ausgangsspannung kann die minimale Einschaltzeit im ausgangsseitigen Kurzschluß einen Ausgangsstrom zur Folge haben, der deutlich über dem gewünschten Sollwert liegt und somit die Bauteile im Ausgangskreis unzulässig belastet.

Aufgabe der Erfindung ist es, einen Gleichstromumrichter der eingangs genannten Art derart auszubilden, daß die Strombegrenzung keine Erhöhung des Stromes über den Ansprechwert einer ersten Strombegrenzungsstufe hinaus erforderlich macht, der für die Veränderung des Tastgrades im Bereich vergleichsweise großer Tastverhältnisse maßgeblich ist und dabei ohne ein Auslassen von Einschaltimpulsen auskommt.

Gemäß der Erfindung wird der Gleichstromumrichter zur Lösung dieser Aufgabe in der im kennzeichnenden Teil des Patentanspruchs 1 angegebenen Weise ausgebildet. Dabei kann die Eingangsspannung des Umrichters die Spannung einer Batterie oder durch Gleichrichtung einer Wechselspannung gewonnen sein. Bei der oder den Ausgangsspannungen des Umrichters kann es sich um Gleich- und/oder Wechselspannungen handeln. Die Ausgangsgleichspannung, die die weitere Vorrichtung zur Strombegrenzung steuert, kann die einen Verbraucher speisende Spannung oder ein Abbild dieser Spannung sein, wobei im Falle eines Wechselrichters eine Gleichrichtung der Spannung vorzusehen ist. Die Reduzierung der Schaltfrequenz kann kontinuierlich oder in Stufen erfolgen.

Durch diese Maßnahmen ergibt sich in vorteilhafter Weise ein Umrichter mit einer weiteren Strombegrenzung durch definierte Erniedrigung der Schaltfrequenz bereits in einem Betriebszustand, in dem die Strombegrenzung praktisch noch nicht durch Schaltzeiten des Schalttransistors oder der Steuerschaltung beeinträchtigt ist.

Bei der Weiterbildung nach Anspruch 2 kann die Ausgangsgleichspannung des Umrichters, die die weitere Vorrichtung zur Strombegrenzung steuert, die Ausgangsspannung eines ausgangsseitigen Hauptstromkreises oder eines zusätzlichen Ausgangskreises sein. Im Falle mehrerer Ausgangskreise wird zweckmäßigerweise mit Hilfe einer EMK-Spannung sichergestellt, daß die Ausgangsgleichspannung, die zur Steuerung der Vorrichtung zur weiteren Strombegrenzung Verwendung findet, ein Abbild der den Verbraucher speisenden Ausgangsgleichspannung ist.

Bei der Weiterbildung nach Anspruch 3 wird die weitere Vorrichtung zur Strombegrenzung mit einer Rückspeisespannung gespeist. Im Hinblick auf eine Potentialtrennung wird die Rückspeisespannung zweckmäßigerweise in einem zusätzlichen Ausgangskreis gewonnen, der an eine zusätzliche Wicklung des Transformators oder an eine zusätzliche Wicklung einer ausgangsseitigen Speicherdrossel angeschlossen ist. Eine Entkopplungsdiode gewährleistet, daß der Steuereingang der weiteren Vorrichtung zur Strombegrenzung vom Ausgang des Spannungsreglers entkoppelt ist.

Bei der Weiterbildung nach Anspruch 4 wird mit einfach realisierbaren Mitteln für die weitere Vorrichtung zur Strombegrenzung ein zweckmäßiger Arbeitsbereich festgelegt.

Die Maßnahmen nach Anspruch 5 sehen in Verbindung mit einer Steuerung der zweiten Vorrichtung durch die Ausgangsgleichspannung eines Laststromkreises eine Potentialtrennung durch einen Optokoppler vor.

Bei den Weiterbildungen nach den Ansprüchen 6 und 7 wird die Schaltfrequenz jeweils durch eine Kapazität variabler Größe bestimmt.

Die Ansprüche 8 bis 10 sind auf weitere Ausgestaltungen der Erfindung gerichtet, bei denen ein Eintakt-Umrichter durch einen Gegentaktsteuerbaustein gesteuert wird und mit einfachen Maßnahmen eine Halbierung der Schaltfrequenz erzielt wird.

Die Erfindung wird anhand der in den Figuren dargestellten Ausführungsbeispiele näher erläutert.

Es zeigen:
- Fig. 1: einen Umrichter, dessen Schaltfrequenz durch die Ausgangsspannung über einen Optokoppler steuerbar ist, indem der frequenzbestimmende Widerstand eines Steuerbausteines verändert wird,
- Fig. 2: ein Spannungs- Stromdiagramm für zwei verschiedene Arten der Strombegrenzung,
- Fig. 3: einen Umrichter, dessen Schaltfrequenz durch eine Rückspeisespannung steuerbar ist,
- Fig. 4: eine Anordnung zur Erzeugung einer Rückspeisespannung,
- Fig. 5 bis 7: zeigen Abwandlungen des Umrichters nach Fig. 1 und zwar

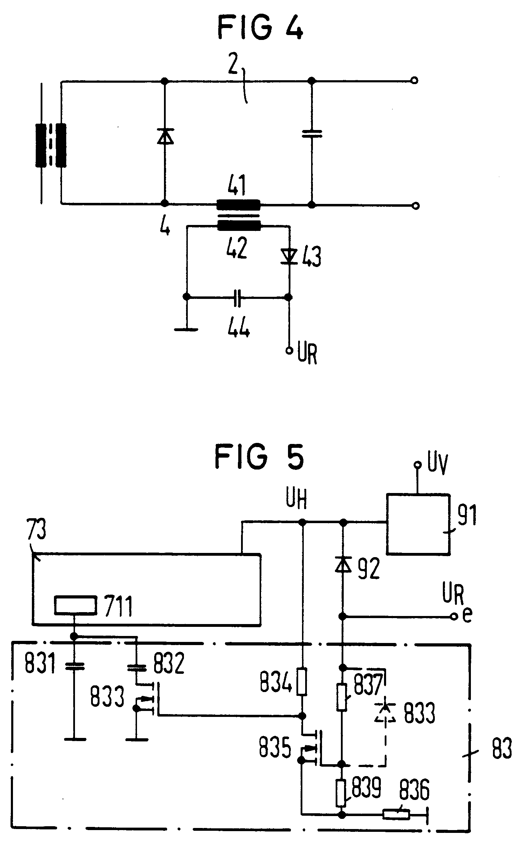

- Fig. 5: eine Anordnung mit einem Steuerbaustein, dessen Frequenz durch eine variable Kapazität veränderbar ist,

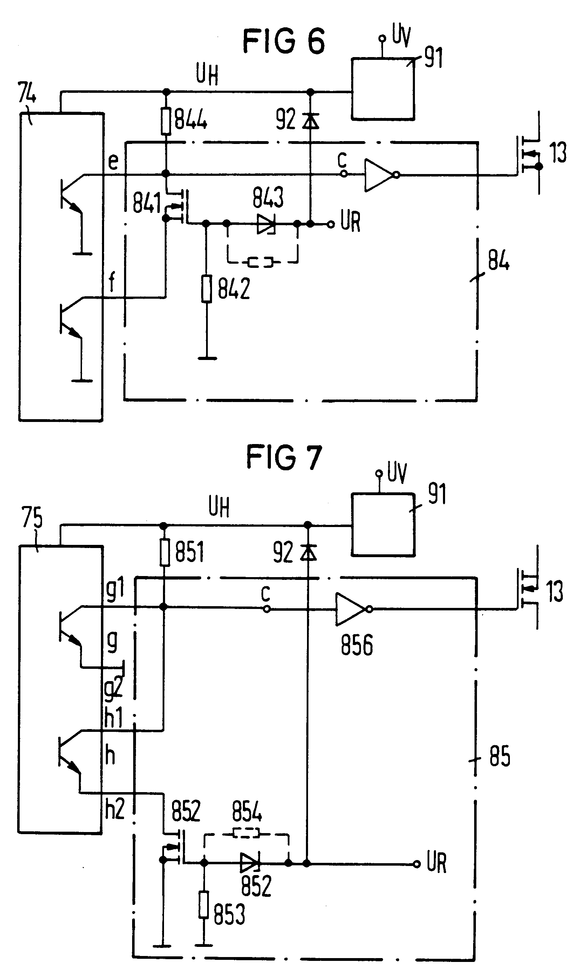

- Fig. 6 und 7: eine Anordnung mit einem Gegentaktsteuerbaustein, dessen einer Ausgang wahlweise unwirksam geschaltet werden kann.

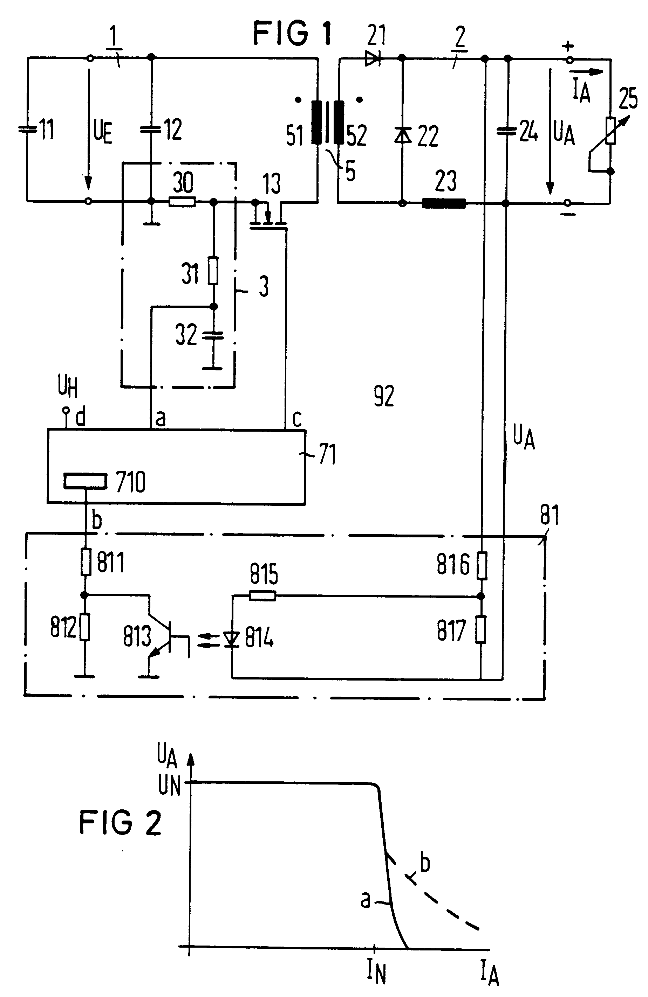

Bei dem in Fig. 1 gezeigten Durchflußumrichter liegt am Eingang der Kondensator 12 und am Ausgang der Kondensator 24. Der Kondensator 12 wird aus der Gleichspannungsquelle 11 mit der Eingangsspannung U_{E} gespeist. Am Kondensator 12 liegt die aus der Primärwicklung 51 des Transformators 5, der Drain-Source-Strecke des Feldeffekttransistors 13 und dem Strommeßwiderstand 30 bestehende Serienschaltung. Anstelle des Feldeffekttransistors 13 kann als Schalttransistor gegebenenfalls ein bipolarer Transistor vorgesehen sein.

Der veränderbare Lastwiderstand 25, der Widerstandswerte zwischen 0 und unendlich annehmen kann, ist über die Gleichrichterdiode 21 an die Sekundärwicklung 52 des Transformators 5 angeschlossen. Dabei enthält der Sekundärkreis des Gleichstromumrichters - ausgehend von der Sekundärwicklung 52 - in einem Längszweig die Gleichrichterdiode 21, in einem darauffolgenden Querzweig die Freilaufdiode 22, in einem weiteren Längszweig die Drossel 23 und in einem parallel zum Lastwiderstand 25 angeordneten Querzweig den Kondensator 24.

Der Feldeffekttransistor 13 ist mit seiner Steuerelektrode an den Steuerausgang c der Steuerschaltung 71 angeschlossen.

Der Strommeßwiderstand 30 ist auf Seiten der Eingangsspannungsquelle 11 mit Bezugspotential verbunden. Zwischen dem anderen Anschluß des Strommeßwiderstandes 30 und Bezugspotential liegt die aus dem Widerstand 31 und dem Kondensator 32 bestehende Serienschaltung. Der Verbindungspunkt des Widerstandes 31 mit dem Kondensator 32 ist an den Steuereingang a der Steuerschaltung 71 geführt.

Der Versorgungsspannungseingang d der Steuerschaltung 71 wird aus einer nicht dargestellten Hilfsspannungsquelle mit der Hilfsspannung U_{H} versorgt.

Die Steuerschaltung 71 enthält den spannungsgesteuerten Oszillator 710. An den Steuereingang b des Oszillators 710 ist eine Serienschaltung zweier Stromzweige angeschlossen, von denen einer aus dem Festwiderstand 811 und der andere aus dem weiteren Festwiderstand 812 mit parallel dazu angeordnetem steuerbaren Widerstand besteht. Der steuerbare Widerstand ist durch die Emitter-Kollektorstrecke des bipolaren Transistors 813 gebildet.

Der Transistor 813 ist Bestandteil des Optokopplers 813, 814 und wird mittels der Diode 814 des Optokopplers 813, 814 durch die Ausgangsspannung U_{A} des Umrichters gesteuert. Zu diesem Zweck ist parallel zum Kondensator 24 der aus den Widerständen 816 und 817 bestehende Spannungsteiler angeordnet. Parallel zum Widerstand 817 dieses Spannungsteilers liegt die aus dem Widerstand 815 und der LED 814 des Optokopplers bestehende Serienschaltung.

Der taktgesteuerte Umrichter nach Fig. 1 ist aus der Gleichspannungsquelle 11 mit der Eingangsspannung U_{E} gespeist. Der Feldeffekttransistor 13 wird durch Einschaltimpulse der Steuerschaltung 71 im Rhythmus einer Schaltfrequenz abwechselnd ein- und ausgeschaltet. Die Vorrichtung 3 dient zur Strombegrenzung durch stromabhängige zeitliche Verkürzung der Einschaltimpulse.

Die weitere Vorrichtung 81 zur Strombegrenzung ist in einem oberen Bereich des zu begrenzenden Stromes wirksam. Die Steuerschaltung 71 wird mit Hilfe der weiteren Vorrichtung 81 zur Strombegrenzung in Abhängigkeit von der Ausgangsspannung U_{A} gesteuert, die ein Kriterium für den zu begrenzenden Strom bildet. Dabei wird die Schaltfrequenz, mit der die Einschaltimpulse aufeinanderfolgen, mit sinkender Ausgangsspannung, d.h. mit wachsendem Ausgangsstrom kleiner.

Die Änderung der Arbeitsfrequenz ergibt sich durch Änderung des frequenzbestimmenden Widerstandes 811, 812. Dieser frequenzbestimmende Widerstand besteht aus einem Grundwert und einem bezogen auf diesen Grundwert hochohmigen Zusatzwert. Der Grundwert wird durch den Widerstand 811, der Zusatzwert durch den Widerstand 812 gebildet. Durch die Reihenschaltung der Widerstände 811 und 812 wird eine minimale Schaltfrequenz fₘᵢₙ festgelegt. Der Widerstand 812 wird durch den Transistor 813 geshuntet. Auf diese Weise wird die Schaltfrequenz des Umrichters zwischen dem Minimalwert fₘᵢₙ und der Nennfrequenz fₒ kontinuierlich verändert. Hierzu wird der Transistor 813 kontinuierlich vom gesperrten in den voll leitenden Zustand gesteuert.

Auf diese Weise wird ein wesentlicher Anstieg des Ausgangsstromes I_{A} über den ersten Grenzwert hinaus zuverlässig verhindert, wobei keinerlei störende Nebeneffekte auftreten.

Zur Veränderung des frequenzbestimmenden Wertes dient die Ausgangsspannung U_{A}. Eine galvanische Trennung von Ausgang und Eingangskreis ist mit Hilfe des Optokopplers realisiert. Ist keine galvanische Trennung erforderlich, so kann der Optokoppler gegebenenfalls durch einen Transistor ersetzt werden.

Fig. 2 zeigt in Kurve b den Verlauf der Ausgangsspannung für den Fall, daß nur die eine Vorrichtung zur Strombegrenzung wirksam ist und keine Verringerung der Schaltfrequenz erfolgt. Überschreitet der Ausgangsstrom I_{A} seinen Nennwert I_{N}, so fällt die Ausgangsspannung zunächst steil ab. Wegen der nicht weiter verringerbaren minimalen Einschaltdauer des Schalttransistors geht die Kurve b in einen Bereich geringerer Steilheit über. Die Strombegrenzung ist daher nur eingeschränkt wirksam.

Durch die weitere Vorrichtung zur Strombegrenzung wird die Schaltfrequenz bei einem Wert der Ausgangsspannung U_{A} herabgesetzt, der etwas über dem Knick liegt, den die Kurve b aufweist. Der steile Abfall der Ausgangsspannung setzt sich daher bis zu vergleichsweise kleinen Werten der Ausgangsspannung U_{A} fort.

Beträgt der Nennwert U_{N} der Ausgangsspannung U_{A} z.B. 5 Volt, so wird mit Hilfe der einen Vorrichtung zur Strombegrenzung im Kurzschlußfall die Ausgangsspannung auf etwa 3,5 Volt abgesenkt. Bei Ausgangsspannungen, die kleiner als 3,5 Volt sind, ist die weitere Vorrichtung zur Strombegrenzung wirksam. Mit wachsendem Ausgangsstrom I_{A} des Umrichters sinkt die Ausgangsspannung U_{A}. Der Strom in der LED 814 des Opto-Kopplers sinkt ebenfalls. Der Transistor 813 des Opto-Kopplers wird hochohmiger. In Serie zum Festwiderstand 811 liegt ein größerer Widerstand und der Oszillator 710 liefert eine kleiner Schaltfrequenz.

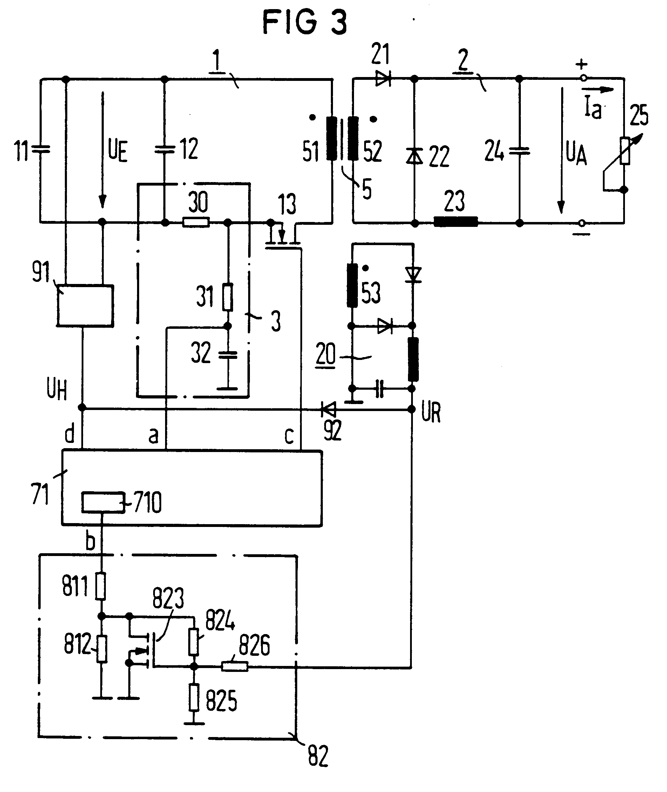

Der in Fig. 3 gezeigte Umrichter unterscheidet sich von dem nach Fig. 1 dadurch, daß als Hilfsspannung U_{H} eine Rückspeisespannung U_{R} dient und daß die weitere Vorrichtung 82 zur Strombegrenzung als steuerbaren Widerstand einen Feldeffekttransistor 823 enthält, der durch die Rückspeisespannung U_{R} gesteuert wird. Die Rückspeisespannung U_{R} liegt an der Serienschaltung der Widerstände 826 und 825. Am Verbindungspunkt der Widerstände 825 und 826 liegt die Steuerelektrode des Feldeffekttransistors 823. Der Feldeffekttransistor liegt mit seiner Drain-Source-Strecke parallel zum Widerstand 812. Zwischen der Drainelektrode und der Steuerelektrode des Feldeffekttransistors 823 liegt der Widerstand 824.

Die Steuerschaltung 72 wird sowohl über den als Hilfsspannungsregler dienenden Spannungsregler 91 aus der Eingangsspannung U_{E} des Umrichters als auch über die Entkopplungsdiode 92 mit einer Rückspeisespannung U_{R} gespeist. Die Rückspeisespannung U_{R} wird durch Gleichrichtung und Siebung der an der weiteren Sekundärwicklung 53 des Transformators 5 auftretenden Spannung im zusätzlichen Ausgangskreis 20 gewonnen, der wie der Ausgangskreis 2 aufgebaut ist und eine - nach Fig. 1 mit einem Optokoppler realisierte - Potentialtrennung gewährleistet.

Die Rückspeisespannung U_{R} stellt ein gutes Abbild der Ausgangsspannung U_{A} dar. Im Falle der Strombegrenzung sinkt sie gleichsinnig mit der Ausgangsspannung U_{A} ab. Im Falle der Strombegrenzung ist die Entkopplungsdiode 92 gesperrt. Auf diese Weise wird verhindert, daß die Strombegrenzung durch den Spannungsregler 91 beeinträchtigt wird.

Der Spannungsregler 91 ist ein Vorregler, der vorzugsweise als Verlustregler bzw. Längsregler oder sogenannter linearer Regler ausgebildet ist und im Normalbetrieb durch die Spannung U_{R} entlastet wird.

Die Frequenz des Oszillators 710, d.h. die Schaltfrequenz des Umrichters wird mit Hilfe des Feldeffekttransistors 823 kontinuierlich herabgesetzt, sobald die Rückspeisespannung absinkt.

Bei den Umrichtern nach Fig. 1 und 3 kann als Steuerschaltung 710 diskrete Logik oder IC-Steuerbausteine mit VCO-Oszillatoren, insbesondere der Steuer-IC TDA 4718, verwendet werden.

An die Stelle des Feldeffekttransistors 823 kann gegebenenfalls ein bipolarer Transistor, ein Optokopplertransistor oder ein Operationsverstärker treten. Ein Relais kann dann Verwendung finden, wenn die Frequenz um einen festen Betrag verringert werden soll.

Fig. 4 zeigt eine Alternativlösung für den zusätzlichen Ausgangskreis und die damit erzielte Potentialtrennung. Im ausgangsseitigen Hauptstromkreis des Umrichters nach Fig. 1 ist hier anstelle der Drossel 23 die Drossel 4 eingefügt, die mit ihrer Primärwicklung 41 als Drossel im Hauptstromkreis 2 liegt. An die Sekundärwicklung 42 ist eine Serienschaltung aus der Diode 43 und den Kondensator 44 angeschlossen. Am Kondensator 44 und damit zwischen den Anschluß e und Masse liegt die Rückspeisespannung U_{R}.

Bei der Anordnung nach Fig. 5 enthält die weitere Vorrichtung zur Strombegrenzung den Oszillator 711, der mit einer frequenzbestimmenden Kapazität versehen ist. Die frequenzbestimmende Kapazität ist durch den Festkondensator 831 und den mit Hilfe eines Schalters dazu parallel schaltbaren Zusatzkondensator 832 gebildet. Gegebenenfalls können weitere, jeweils über einen eigenen Schalter zuschaltbare weitere Zusatzkondensatoren vorgesehen sein.

Der Schalter ist durch den Feldeffekttransistor 833 gebildet, der mit Hilfe des weiteren Feldeffekttransistors 835 gesteuert wird. Die Drain-Source-Strecke des Feldeffekttransistors 835 liegt in einem von drei Zweigen eines an der Hilfsspannung U_{H} liegenden Spannungsteilers. In diesem Spannungsteiler sind der Widerstand 834, die Drain-Source-Strecke des Feldeffekttransistors 835 und der Widerstand 836 in Serie zueinander angeordnet.

Die Gateelektrode des Feldeffekttransistors 835 liegt am Abgriff eines weiteren Spannungsteilers, der zwischen der Verbindung der Sourceelektrode des Feldeffekttransistors 835 und dem Widerstand 836 einerseits und dem Anschluß e für die Rückspeisespannung U_{R} andererseits liegt. Der weitere Spannungsteiler ist mit der Rückspeisespannung U_{R} beaufschlagt und besteht aus den Widerständen 837 und 839. An die Stelle des Widerstandes 837 kann die für die Rückspeisespannung U_{R} in Sperrichtung gepolte Z-Diode 838 oder eine für die Rückspeisespannung in Durchlaßrichtung gepolte Diode treten.

Bei dem Umrichter nach Fig. 5 wird die Arbeitsfrequenz nicht kontinuierlich, sondern durch eine Änderung der frequenzbestimmenden Kapazität um einen festen Betrag verringert, indem die Zusatzkapazität 832 zugeschaltet wird. Als Schaltelement dient der Mosfet 833 und als Auslösekriterium für das Zuschalten die Rückspeisespannung U_{R}.

Als Steuerschaltung 73 kann insbesondere der IC-Steuerbaustein TDA 4718 dienen.

Je nach den Zusatzforderungen bzw. den gewünschten Auslösekriterien und der hierfür benötigten Auswerteschaltung kann zur Zuschaltung des Kondensator 832 anstelle des Feldeffekttransistors 833 ein bipolarer Transistor, ein Optokoppler-Ausgangstransistor, ein Operationsverstärker, ein Komparator oder ein Relais verwendet werden.

Bei den Umrichtern nach Fig. 6 und 7 wird der Schalttransistor 13 eines Eintaktumrichters jeweils durch einen Gegentaktsteuerbaustein 74 bzw.75 gesteuert. Der Gegentaktbaustein 74 bzw. 75 gibt an den beiden Steuerausgängen e und f abwechselnd Einschaltimpulse gleicher Polarität ab. Der Steuerausgang f bzw. h ist im Normalbetrieb des Umrichters wirksam und bei Werten der Rückspeisespannung U_{R} unterhalb eines vorgegebenen Grenzwertes unwirksam gesteuert. Auf diese Weise läßt sich mit einfachen Mitteln eine Halbierung der Schaltfrequenz vornehmen. Im Normalbetrieb sind die beiden Ausgangstransistoren des Steuerbausteins 74 bzw. 75 parallelgeschaltet. Zur Frequenzhalbierung wird einer der beiden parallelen Ausgänge abgeschaltet.

Diese Ausführungsformen sind insbesondere dann von Vorteil, wenn für einen Eintaktumrichter ohnehin ein Gegentaktsteuerbaustein Verwendung findet.

Bei dem Umrichter nach Fig. 6 liegen die beiden Steuerausgänge e, f des Gegentaktsteuerbausteins 74 jeweils an der Emitter-Kollektorstrecke eines Transistors. Die Emitter dieser beiden Transistoren sind intern einpolig an Bezugspotential gelegt. Die Kollektoren der beiden Transistoren sind über den Feldeffekttransistor 841 miteinander verbunden. Der Feldeffekttransistor 841 bildet einen Schalter, der im Normalbetrieb des Umrichters geschlossen und unterhalb eines vorgegebenen Grenzwertes der Rückspeisespannung U_{R} geöffnet ist. Seine Steuerelektrode ist über die für die Rückspeisespannung U_{R} in Sperrrichtung gepolte Z-Diode 843 an die Rückspeisespannung U_{R} angeschlossen und über den Widerstand 842 an Masse geführt. Die Drainelektrode ist über den Widerstand 844 an die Hilfsspannung U_{H} angeschlossen. An die Stelle der Z-Diode 843 kann gegebenenfalls ein Widerstand treten.

Bei der Anordnung nach Fig. 7 liegen die beiden Steuerausgänge g und h ebenfalls jeweils an der Emitter-Kollektorstrecke eines Transistors. Die Kollektoren dieser beiden Transistoren sind extern unmittelbar miteinander und über den Widerstand 851 mit der Hilfsspannung U_{H} und über den Treiber 856 mit der Steuerelektrode des Schalttransistors 13 verbunden. Der Emitter des betreffenden Transistors ist bei dem einen Steuerausgang g unmittelbar und bei dem anderen Steuerausgang h über den Feldeffekttransistor 852 an Bezugspotential geführt, der abhängig von der Rückspeisespannung und damit abhängig von dem zu begrenzenden Strom ein-/und ausschaltbar ist.

Die Source-Elektrode des Feldeffekttransistors 852 ist unmittelbar mit Masse verbunden. Die Steuerelektrode ist über den Widerstand 853 an Masse un über die für die Rückspeisespannung U_{R} in Sperrichtung gepolte Z-Diode 855 an die Rückspeisespannung U_{R} geführt. An die Stelle der Z-Diode 855 kann der Widerstand 854 treten.

Als Steuerschaltung dient bei dem Umrichter nach Fig. 6 insbesondere der IC-Steuerbaustein TDA 4718 (Siemens) und bei dem Umrichter nach Fig. 7 der IC-Steuerbaustein UE 3524 (UNITRODE).

Die anhand eines Durchflußumrichters beschriebene Art der Strombegrenzung kann in entsprechender Weise auch bei anderen getakteten Stromversorgungen, insbesondere bei Gegentaktumrichtern vorteilhaft verwendet werden.

Umrichter der beschriebenen Art lassen sich besonders vorteilhaft bei getakteten Netzanschluß- und Batterieanschluß-Geräten, insbesondere bei Geräten mit variabler, störempfindlicher Belastung, insbesondere bei Geräten mit Ausgangsspannungen über 5 Volt verwenden. Die Eingangsspannung kann z.B. 300 V, die Ausgangsspannung U_{A} = 80 V und die Versorgungsspannung der Steuerschaltung U_{H} = 10 V betragen.

## Patentansprüche

1. Taktgesteuerter Umrichter, der aus einer Gleichspannungsquelle (11) mit einer Eingangsspannung (U_{E}) gespeist ist, mit wenigstens einem durch Einschaltimpulse einer Steuerschaltung (71...75) im Takt einer Schaltfrequenz ein- und ausschaltbaren Transistor (13) und mit einer Vorrichtung (3) zur Strombegrenzung durch stromabhängige zeitliche Verkürzung der Einschaltimpulse und mit einer weiteren Vorrichtung (81) zur Strombegrenzung, die in einem oberen Bereich des zu begrenzenden Stromes wirksam ist,
**dadurch gekennzeichnet,**
daß die weitere Vorrichtung (81) zur Strombegrenzung einen mit seinem Steuereingang an die weitere Vorrichtung (81) zur Strombegrenzung angeschlossenen spannungsgesteuerten Oszillator (710) steuert und daß ein Eingang der weiteren Vorrichtung (81) zur Strombegrenzung an einen Ausgang des Umrichters angeschlossen ist und daß der spannungsgesteuerte Oszillator (710) mit Hilfe der weiteren Vorrichtung (81) zur Strombegrenzung in Abhängigkeit von der der weiteren Vorrichtung (81) zur Strombegrenzung zugeführten Ausgangsspannung (U_{A}, U_{R}) derart steuerbar ist, daß die Schaltfrequenz, mit der die Einschaltimpulse aufeinanderfolgen, bei unterhalb eines vorgegebenen Grenzwertes liegenden Ausgangsspannungen mit sinkender Ausgangsspannung kleiner wird.

2. Taktgesteuerter Umrichter nach Anspruch 1,
**dadurch gekennzeichnet**,
daß der Umrichter ein Gleichspannungs-Gleichspannungsumrichter ist und daß die die weitere Vorrichtung (81) zur Strombegrenzung steuernde Ausgangsgleichspannung des Umrichters wenigstens ein Abbild der einen Verbraucher (25) speisenden Ausgangsgleichspannung (U_{A}) ist.

3. Taktgesteuerter Umrichter nach Anspruch 2,
**dadurch gekennzeichnet**,
daß die Steuerschaltung (71...75) sowohl über einen Spannungsregler (91) aus der Eingangsspannung (U_{E}) des Umrichters als auch über eine Entkopplungsdiode (92) mit einer Rückspeisespannung (UR) gespeist ist, und daß die die weitere Vorrichtung (81) zur Strombegrenzung steuernde Ausgangsgleichspannung die Rückspeisespannung (U_{R}) ist.

4. Taktgesteuerter Umrichter nach einem der Ansprüche 1 bis 3,
**dadurch gekennzeichnet,**
daß an den Steuereingang (b) des Oszillators (710) eine Serienschaltung zweier Stromzweige angeschlossen ist, von denen einer aus einem Festwiderstand (811, 821) und der andere aus einem Festwiderstand (812, 822) mit parallel dazu angeordnetem steuerbaren Widerstand (Transistor 813, 823) besteht.

5. Taktgesteuerter Umrichter nach Anspruch 4,
**dadurch gekennzeichnet,**
daß der steuerbare Widerstand (Transistor 813) über einen Opto-Koppler (813, 814) durch die Ausgangsgleichspannung (Ausgangsspannung U_{A}) eines Laststromkreises steuerbar ist.

6. Taktgesteuerter Umrichter nach einem der Ansprüche 1 bis 3,
**dadurch gekennzeichnet,**
daß die weitere Vorrichtung (3) zur Strombegrenzung einen Oszillator (711) mit frequenzbestimmender Kapazität enthält und daß die frequenzbestimmende Kapazität durch einen Festkondensator (831) und wenigstens einen mit Hilfe eines Schalters (Feldeffekttransistor 833) dazu parallel schaltbaren Zusatzkondensator (832) gebildet ist.

7. Taktgesteuerter Umrichter nach Anspruch 6,
**dadurch gekennzeichnet**,
daß der Schalter durch einen Feldeffekttransistor (833) gebildet ist, der mit Hilfe eines weiteren Feldeffekttransistors (835) steuerbar ist, dessen Drain-Source-Strecke in einen von mehreren Zweigen eines an einer Hilfsspannung (u_{H}) liegenden Spannungsteilers (834, 835, 836) liegt und dessen Gateelektrode am Abgriff eines weiteren, mit der Ausgangsgleichspannung (U_{R}) beaufschlagten Spannungsteilers (837, 839) liegt.

8. Taktgesteuerter Umrichter nach einem der Ansprüche 1 bis 3,
**dadurch gekennzeichnet**,
daß der Schalttransistor (13) eines Eintaktumrichters durch einen Gegentaktsteuerbaustein (74, 75) steuerbar ist, der an zwei Steuerausgängen (e, f; g, h) abwechselnd Einschaltimpulse gleicher Polarität abgibt und daß einer der Steuerausgänge (f, h) im Normalbetrieb des Umrichters wirksam und dann unwirksam gesteuert ist, wenn die die weitere Vorrichtung (3) zur Strombegrenzung steuernde Ausgangsgleichspannung (U_{R}) kleiner als ein vorgegebener Grenzwert ist.

9. Taktgesteuerter Umrichter nach Anspruch 8,
**dadurch gekennzeichnet,**
daß die beiden Steuerausgänge (e, f) des Gegentaktsteuerbausteins (74) jeweils einpolig an Bezugspotential liegen und über einen Schalter (Feldeffekttransistor 841) miteinander verbunden sind, der im Normalbetrieb des Umrichters geschlossen und bei einem unwirksam gesteuerten einen Steuerausgang (f) geöffnet wird.

10. Taktgesteuerter Umrichter nach Anspruch 8,
**dadurch gekennzeichnet,**
daß die beiden Steuerausgänge (g, h) mit ihrem einen Anschluß einpolig unmittelbar miteinander verbunden sind und daß der andere Anschluß (g2, h2) bei dem einen Steuerausgang (g) unmittelbar und bei dem anderen Steuerausgang (h) über einen Schalter (Feldeffekttransistor 852) an Bezugspotential geführt ist, der im Normalbetrieb des Umrichters geschlossen und bei einem unwirksam gesteuerten einen Steuerausgang (h) geöffnet wird.

## Claims

1. Clock-controlled converter which is supplied with an input voltage (U_{E}) from a direct-current source (11), having at least one transistor (13) which can be turned on and off at the rate of a switching frequency by means of turn-on pulses of a control circuit (71...75), and having a device (3) for current limitation by current-dependent temporal shortening of the turn-on pulses and having a further device (81) for current limitation which is effective in an upper range of the current to be limited, characterized in that the further device (81) for current limitation controls a voltage-controlled oscillator (710) which is connected with its control input to the further device (81) for current limitation, and in that an input of the further device (81) for current limitation is connected to an output of the converter and in that the voltage-controlled oscillator (710) can be controlled by means of the further device (81) for current limitation as a function of the output voltage (U_{A},U_{R}), fed to the further device (81) for current limitation, in such a manner that the switching frequency at which the turn-on pulses follow each other becomes smaller with a decreasing output voltage in the case of output voltages which lie below a predetermined limit value.

2. Clock-controlled converter according to Claim 1, characterized in that the converter is a DC/DC converter and in that the DC output voltage, which controls the further device (81) for current limitation, of the converter is at least a replica of the DC output voltage (U_{A}) supplying a load (25).

3. Clock-controlled converter according to Claim 2, characterized in that the control circuit (71...75) is supplied both from the input voltage (U_{E}) of the converter via a voltage regulator (91) and with a feedback voltage (UR) via a decoupling diode (92), and in that the DC output voltage, controlling the further device (81) for current limitation, is the feedback voltage (U_{R}).

4. Clock-controlled converter according to one of Claims 1 to 3, characterized in that a series circuit of two current branches is connected to the control input (b) of the oscillator (710), one of these current branches comprising a fixed resistor (811, 821) and the other a fixed resistor (812, 822) with a controllable resistor (transistor 813, 823) arranged in parallel thereto.

5. Clock-controlled converter according to Claim 4, characterized in that the controllable resistor (transistor 813) can be controlled via an opto-coupler (813, 814) by means of the DC output voltage (output voltage U_{A}) of a load circuit.

6. Clock-controlled converter according to one of Claims 1 to 3, characterized in that the further device (3) for current limitation contains an oscillator (711) having a frequency-determining capacitance and in that the frequency-determining capacitance is formed by a fixed capacitor (831) and at least one additional capacitor (832) which can be switched in parallel thereto by means of a switch (field effect transistor 833).

7. Clock-controlled converter according to Claim 6, characterized in that the switch is formed by a field effect transistor (833) which can be controlled by means of a further field effect transistor (835) whose drain-source path is located in one of a plurality of branches of a voltage divider (834, 835, 836) connected to an auxiliary voltage (U_{H}) and whose gate electrode is connected to the tap of a further voltage divider (837, 839), to which the DC output voltage (U_{R}) is applied.

8. Clock-controlled converter according to one of Claims 1 to 3, characterized in that the switching transistor (13) of a single-ended converter can be controlled by a push-pull control component (74, 75) which alternately emits turn-on pulses of identical polarity on two control outputs (e, f; g, h) and in that one of the control outputs (f, h) is activated during normal operation of the converter and is deactivated when the DC output voltage (U_{R}) controlling the further device (3) for current limitation, is smaller than a predetermined limit value.

9. Clock-controlled converter according to Claim 8, characterized in that the two control outputs (e, f) of the push-pull control component (74) are connected in each case with one pole to a reference potential and are connected to each other by means of a switch (field effect transistor 841) which is closed during normal operation of the converter and is opened in the case of a control output (f) which is deactivated.

10. Clock-controlled converter according to Claim 8, characterized in that the two control outputs (g, h) are directly connected with their one connection to each other with one pole and in that the other connection (g2, h2) is in the case of the one control output (g) guided directly and in the case of the other control output (h) guided via a switch (field effect transistor 852) to reference potential, which switch is closed during normal operation of the converter and is opened in the case of a control output (g) which is deactivated.

## Revendications

1. Convertisseur commandé de façon cadencée, qui est alimenté par une tension d'entrée (U_{E}) à partir d'une source de tension continue (11), comportant au moins un transistor (13) pouvant être amené à l'état conducteur et bloqué par des impulsions de fermeture d'un circuit de commande (71...75) à la cadence d'une fréquence de commutation, un dispositif (3) destiné à limiter le courant par raccourcissement dans le temps, en fonction du courant, des impulsions de fermeture, et un autre dispositif (81) qui est destiné à limiter le courant et qui agit dans une gamme supérieure du courant à limiter, caractérisé par le fait
que l'autre dispositif (81) de limitation du courant commande un oscillateur (710) commandé par la tension, qui est raccordé, par son entrée de commande, à l'autre dispositif de limitation du courant (81), qu'une entrée de l'autre dipositif (81) de limitation du courant est raccordée à une sortie du convertisseur, que l'oscillateur commandé par tension (710) peut être commandé, à l'aide de l'autre dispositif de limitation du courant (81), en fonction de la tension de sortie (U_{A},U_{R}) envoyée à l'autre dispositif de limitation du courant (81), de telle sorte que la fréquence de commutation, à laquelle les impulsions de fermeture se succèdent, diminue pour des tensions de sortie inférieures à une valeur de seuil prédéterminée, lorsque la tension de sortie diminue.

2. Convertisseur commandé de façon cadencée suivant la revendication 1, caractérisé par le fait que le convertisseur est un convertisseur continu-continu et que la tension continue de sortie, qui commande l'autre dispositif (81) de limitation du courant, du convertisseur est au moins une reproduction de la tension continue de sortie (U_{A}), qui alimente un récepteur (25).

3. Convertisseur commandé de façon cadencée suivant la revendication 2, caractérisé par le fait que le circuit de commande (71 à 75) est alimenté aussi bien par l'intermédiaire d'un régulateur de tension (91) à partir de la tension d'entrée (U_{E}) du convertisseur que, également, par l'intermédiaire d'une diode à découplage (92) par une tension de rétroalimentation (U_{R}), et que la tension continue de sortie, qui commande l'autre dispositif (81) de limitation du courant, est la tension de rétroalimentation (U_{R}).

4. Convertisseur commandé de façon cadencée suivant l'une des revendications 1 à 3, caractérisé par le fait qu'à l'entrée de commande (b) de l'oscillateur (710) est raccordé un circuit série formé de deux branches de courant, dont l'une est constituée d'une résistance fixe (811,821) et dont l'autre est constituée d'une résistance fixe (812,822) ayant en parallèle des résistances commandables (transistors 813, 823).

5. Convertisseur commandé de façon cadencée suivant la revendication 4, caractérisé par le fait que la résistance commandable (transistor 813) peut être commandée par l'intermédiaire d'un octocoupleur (813, 814), par la tension continue de sortie (tension de sortie U_{A}) d'un circuit de charge.

6. Convertisseur commandé de façon cadencée suivant l'une des revendications 1 à 3, caractérisé par le fait que l'autre dispositif (3) de limitation du courant contient un oscillateur (711) pourvu d'une capacité déterminant la fréquence et que la capacité déterminant la fréquence est formée d'un condensateur fixe (831) et d'au moins un condensateur supplémentaire (832) pouvant être branché en parallèle avec le précédent au moyen d'un interrupteur (transistor à effet de champ 833).

7. Convertisseur commandé de façon cadencée suivant la revendication 6, caractérisé par le fait que l'interrupteur est formé d'un transistor à effet de champ (833), qui peut être commandé à l'aide d'un autre transistor à effet de champ (835), dont la voie drain-source est située dans l'une parmi plusieurs branches d'un diviseur de tension (834, 835, 836) placé à une tension auxiliaire (u_{H}) et dont l'électrode de grille est à la prise d'un autre diviseur de tension (837, 839) recevant la tension continue de sortie (U_{R}).

8. Convertisseur commandé de façon cadencée suivant l'une des revendications 1 à 3, caractérisé par le fait que le transistor de commutation (13) d'un convertisseur à une alternance peut être commandé par un module de commande push-pull (74,75), qui délivre, en alternance sur deux sorties de commande (e, f; g, h), des impulsions de fermeture de même polarité et que l'une des sorties de commande (f, h) est active pendant le fonctionnement normal du convertisseur et est placée à l'état inactif, lorsque la tension continue de sortie (U_{R}), qui commande l'autre dispositif (3) de limitation du courant, est inférieure à une valeur limite prescrite.

9. Convertisseur commandé de façon cadencée suivant la revendication 8, caractérisé par le fait que les deux sorties de comamnde (e, f) du module de commande push-pull (74) sont raccordées chacune par un pôle au potentiel de reférence et sont reliées entre elles par l'intermédiaire d'un interrupteur (transistor à effet de champ 841), qui est fermé pendant le fonctionnement normal du convertisseur et est ouvert lorsqu'une sortie de commande (f) est placée à l'état inactif.

10. Convertisseur commandé de façon cadencée suivant la revendication 8, caractérisé par le fait que les deux sorties de commande (g, h) sont reliées entre elles directement par un pôle, par une de leurs bornes et que l'autre borne (g2, h2) est raccordée directement dans le cas d'une sortie de commande (g) et par l'intermédiaire d'un interrupteur (transistor à effet de champ 852) dans le cas de l'autre sortie de commande (h) au potentiel de référence, cet interrupteur étant fermé pendant le fonctionnement normal du convertisseur et étant ouvert dans le cas où une sortie de commande (h) est placée à l'état inactif.
